# EUROPÄISCHE PATENTSCHRIFT

(11) **EP 1 420 545 B1**
(45) Veröffentlichungstag und Bekanntmachung des Hinweises auf die Patenterteilung: **05.10.2011**
(21) Anmeldenummer: 02025496.7
(22) Anmeldetag: 15.11.2002
(51) Int. Cl.: H04L 12/26

(54) **Verfahren zur Erstellung eines Kommunikations-Ablaufs zwischen mindestens zwei Instanzen und Protokolltester dafür**
Method for creating communications sequences between two instances and protocol tester therefor
Procédé de création d'une séquence de communications entre deux instances et testeur de protocole correspondant

(43) Veröffentlichungstag der Anmeldung: 19.05.2004
(73) Patentinhaber: Tektronix International Sales GmbH, 8212 Neuhausen (CH)
(72) Erfinder: Zander, Christian, 13589 Berlin (DE)
(74) Vertreter: Schurack, Eduard F.

(56) Entgegenhaltungen:
- EP-A- 1 128 600
- DE-C- 19 518 135
- US-A1- 2002 128 811
- ETSI: "Methods for Testing and Specification (MTS); The Testing and Test Control Notation version 3; Part 3: TTCN-3 Graphical presentation Format (GFT)" ETSI TR 101 873-3 V1.2.1, Mai 2002 (2002-05), Seiten 1-146, XP002238433 SOPHIA ANTIPOLIS (FR)

## Beschreibung

Die vorliegende Erfindung betrifft ein Verfahren nach dem Oberbegriff von Patentanspruch 1 sowie einen Protokolltester nach dem Oberbegriff von Patentanspruch 12. Ein derartiges Verfahren beziehungsweise ein derartiger Protokolltester sind bekannt aus der EP 1 128 600 A1.

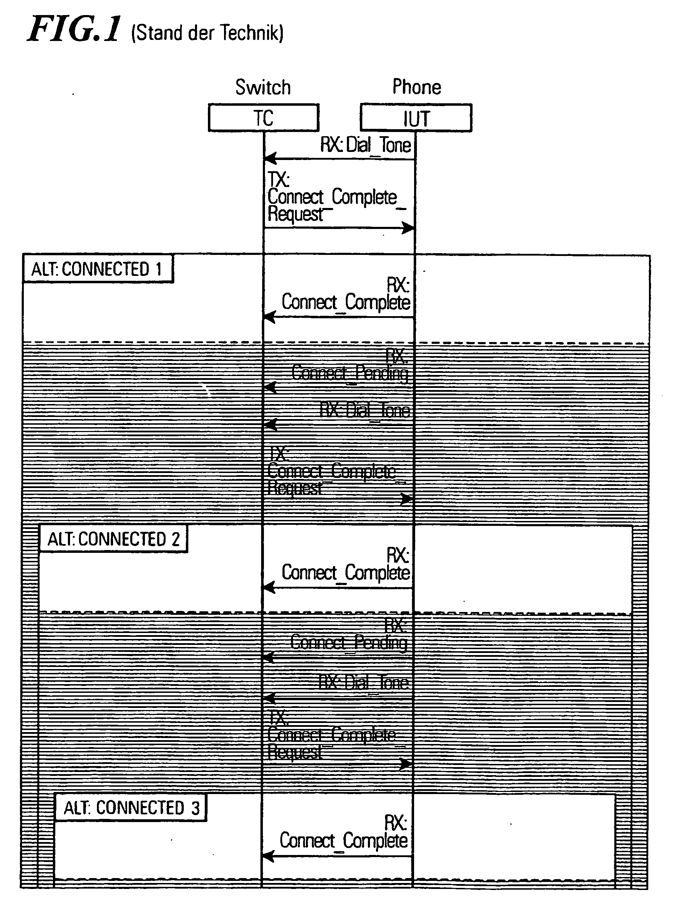

Dieses Dokument erläutert am Beispiel der standardisierten Sprache MSC (Message Sequence Charts), die dazu dient, einen Kommunikationsablauf zwischen zwei Instanzen graphisch darzustellen, die Umsetzung der graphischen Darstellung in eine ausführbare Version eines Kommunikationsablaufs. Details zu MSC können der ITU-T Z.120 entnommen werden. Damit lassen sich Kommunikationsabläufe selbst von nicht programmierkundigen Benutzern auf einfache Weise kreieren. Damit stellt die in der EP 1 128 600 A1 beschriebene Erfindung einen großen Fortschritt dar. Trotzdem verbleiben Probleme, die die Erstellung eines Kommunikationsablaufs mit MSC umständlich machen, die Lesbarkeit des erzeugten Codes erschweren und mit einem hohen Speicherbedarf einhergehen. Mit Bezug auf die Figuren 1 bis 3 sollen nachfolgend Beispiele gezeigt werden, die dies veranschaulichen:
Figur 1 zeigt am Beispiel einer Repetition den Kommunikationsablauf zwischen der Instanz TC (Test Component) und der Instanz IUT (Item Unter Test). Die Instanz TC wird von einem Protokolltester gebildet, während die Instanz IUT das zu testende Gerät darstellt. Die Aufgabe besteht darin, dass die Instanz TC darauf wartet, daß ein Verbindungsaufbau durch die Instanz IUT komplettiert wurde. Zunächst wartet also die Instanz auf den Empfang eines Wähltons und sendet nach Erhalt eines Wähltons eine Anfrage, ob der Verbindungsaufbau komplettiert wurde. Falls IUT anwortet, daß der Aufbau vollständig ist, ist die Aufgabe beendet. Falls jedoch IUT sendet, daß der Verbindungsaufbau noch nicht vollständig ist, wartet TC weiterhin auf den Empfang eines Wähltons. Nach Empfang desselben, stellt TC wiederum die Frage, ob der Aufbau bereits vollständig ist. Erhält TC eine positive Antwort, ist die Aufgabe erledigt, falls nicht, wiederholt sich die Abfolge von Warten und Vollständigkeitsanfrage und zwar solange, bis der Programmierer irgendwann zu der Ansicht kommt, daß alle relevanten Fälle abgedeckt sein müßten. Wie man sieht, kein einfaches Anliegen, so daß sich die "Alt"-Boxen in Fig. 1 noch mehrfach nach unten fortsetzen können. Dies ist äußerst umständlich und zeitraubend und erschwert die Lesbarkeit eines längeren Kommunikationsablaufs, in dem diese Aufgabe eingefügt ist.

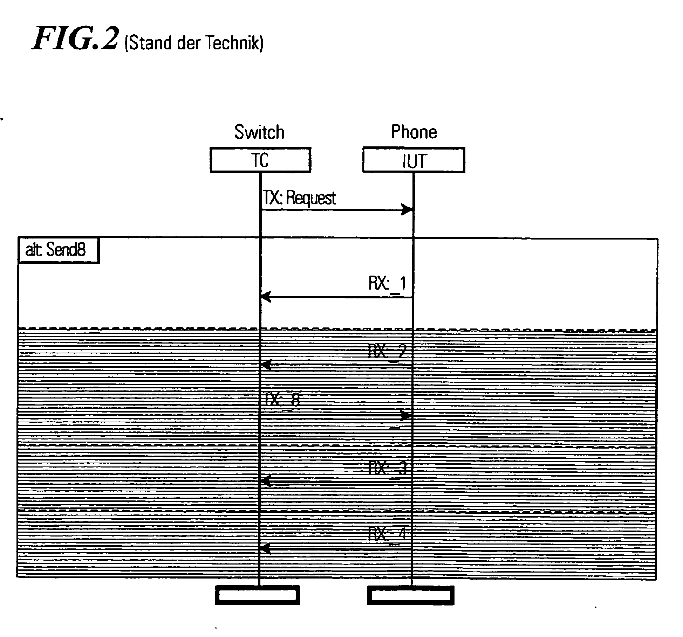

Figur 2 zeigt einen Kommunikationsablauf, der nach dem aus dem Stand der Technik bekannten Verfahren eingegeben wurde, wonach die Instanz TC bei Empfang des Ereignisses 2 das Ereignis 8 zu senden hat. Geht man davon aus, daß diese Kommunikationssequenz in einer Vielzahl von Kommunikationsabläufen enthalten ist und sich in der Protokollentwicklung die Änderung ergibt, dass bei Empfang des Ereignisses 2 das Ereignis 8 und das Ereignis 9 zu senden sind, so muss jedes einzelne Chart im Hinblick auf diese Änderung geändert werden. Ohne Zweifel stellt dies eine Fehlerquelle dar, falls die Änderung einzelner Charts vergessen wird. Außerdem kostet dies viel Zeit.

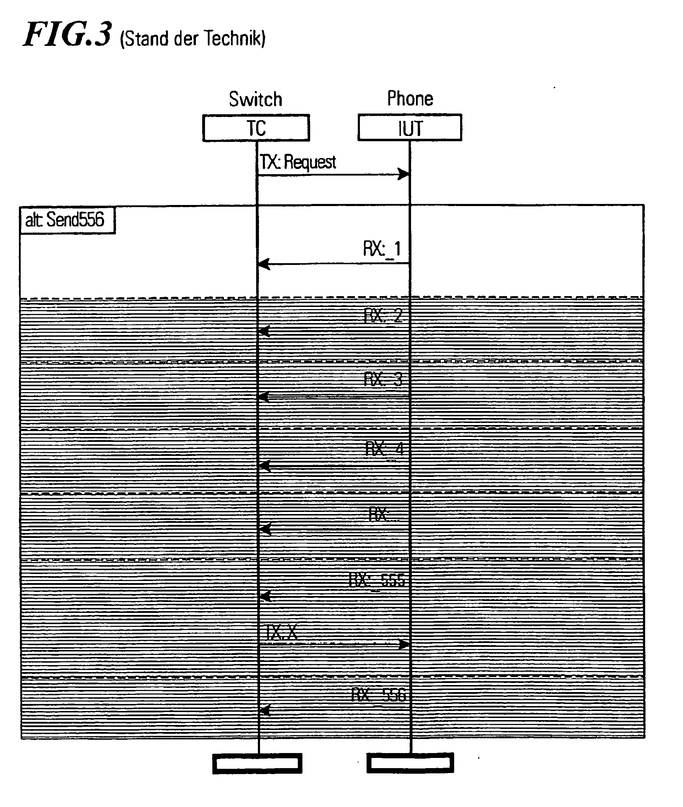

Figur 3 zeigt eine Sequenz eines Kommunikationsablaufs, die ebenfalls mit dem aus dem Stand der Technik bekannten Verfahren kreiert wurde. Die Aufgabe besteht darin, dass die Instanz TC bei Empfang des Ereignisses 555 das Ereignis X zu senden hat. Bei Empfang aller anderen Ereignisse zwischen 1 und 10.000 soll die Instanz TC nichts senden. Mit diesem Beispiel könnte realisiert werden, dass nur bei Empfang einer bestimmten Telefonnummer eine bestimmte Nachricht gesendet wird. Es ist offensichtlich, dass der Programmieraufwand für diese Aufgabe immens ist und der derzeitige Zustand daher unbefriedigend.

Die Alternative zur Vermeidung derartig umständlicher Konstrukte, wie sie in den Figuren 1 und 2 dargestellt sind, besteht darin, Boxen mit Programmiercode in die Charts einzufügen. Damit geht jedoch der Nachteil einher, der mit der in der EP 1 128 600 A1 dargestellten Erfindung vermieden werden sollte, nämlich dass der Benutzer zur Definition eines Kommunikationsablaufs über Programmierkenntnisse verfügen muss. Bei dem bekannten Protokolltester müssten sogenannte Forth-Boxen, das heißt Boxen mit Programmcode in der Programmiersprache Forth, eingefügt werden, in die der Code hineinprogrammiert werden müsste.

Die US 2002/0128811 A1 offenbart ein Verfahren zum Emulieren eines Terminals und ein Testgerät zum Testen eines Telekommunikationsnetzwerks mit Funktionswahl mittels Windows-Benutzerschnittstelle. Sie betrifft insbesondere den Aufbau eines Callszenarios auf der Basis einer Abfolge von Schlüsselwörtern. In Paragraph [0027] wird beschrieben, wie durch die Angabe einer Zahl innerhalb der Programmierung eines Testszenarios festgelegt werden kann, wie oft der Teil zwischen Start- und Stopp-Szenario, das heißt der eigentliche Test, durchgeführt wird. Bei dieser Zahl handelt es sich um eine echte Zahl und keine Variable.

Die ETSI: "Methods for Testing and Specification (MTS); The Testing and Test Control Notation version 3; Part 3: TTCN-3 Graphical presentation Format (GFT)" ETSI TR 101 873-3 V1.2.1, Mai 2002 (2002-05), Seiten 1 - 146, XP002238433 Sophia Antipolis (FR) beschreibt das Präsentationsformat sogenannter Message Sequence Charts (MSC) für die TTCN-3 Kemsprache, wie sie in der ES 201 873-1 definiert ist.

Der vorliegenden Erfindung liegt deshalb die Aufgabe zugrunde, ein gattungsgemäßes Verfahren beziehungsweise einen gattungsgemäßen Protokolltester derart weiterzubilden, dass Kommunikationsabläufe mit geringerem Programmieraufwand, höherer Übersichtlichkeit, schnellerer Ausführbarkeit und geringerem Speicherbedarf erstellt werden können. Diese Aufgabe wird gelöst durch ein Verfahren mit den Merkmalen von Patentanspruch 1 sowie durch einen Protokolltester mit den Merkmalen von Patentanspruch 11.

Auch wenn die vorliegende Erfindung am Beispiel der Testbeschreibungssprache MSC dargestellt wird, so ist sie selbstverständlich auf andere Beschreibungssprachen übertragbar.

Der Erfindung liegt die Erkenntnis zugrunde, dass sich die obige Aufgabe dadurch lösen lässt, dass Aktivitäten des Protokolltesters des Kommunikationsablaufs nicht vom Eintreffen von Ereignissen abhängig gemacht werden, sondern vom Eintreffen bestimmter Inhalte von Variablen.

Während im Stand der Technik Verzweigungen über Ereignisse definiert werden mussten, lässt sich mit dem erfindungsgemäßen Verfahren eine Verzweigung in Abhängigkeit des Inhalts einer bestimmten Variablen realisieren.

Auf der Basis des erfindungsgemäßen Verfahrens kann beispielsweise ein Benutzer eine Switch-Case-Funktionalität spezifizieren, die der Protokolltester in Abhängigkeit des Inhalts der Variablen ausführt. Auch die Realisierung einer Loop-Funktionalität in Abhängigkeit des Inhalts der Variablen ist möglich. Die Spezifizierung von Jump- beziehungsweise GoTo-Funktionalitäten und/oder eine If Then-Funktionalität in Abhängigkeit des Inhalts einer Variablen ist möglich.

Bevorzugt werden in Schritt a) des gattungsgemäßen Verfahrens die an der Kommunikation beteiligten Instanzen graphisch ausgewählt und/oder in Schritt b) die Protokollschicht graphisch ausgewählt und/oder in Schritt c) die abstrakten Kommunikationsschnittstellen der Protokollschicht graphisch ausgewählt, wobei den dabei auswählbaren Parametern Beschreibungsdateien zugeordnet sind, die in Schritt e) des gattungsgemäßen Verfahrens zur Erstellung eines zwischen den Instanzen ausführbaren Kommunikationsablaufs, das heißt eines ablauffähigen Skripts, verwendet werden.

Bevorzugt umfassen die abstrakten Kommunikationsschnittstellen SAPs (Service Access Points). Die Kommunikationsdaten umfassen bevorzugt PDUs (Protocol Data Units) und/oder ASPs (Abstract Service Primitives). Schritt d) des gattungsgemäßen Verfahrens umfasst bevorzugt die Teilschritte des graphischen Auswählens eines Datenformats sowie den graphischen Aufbau einer Kommunikationsabfdge zwischen den beteiligten Instanzen. In dem zuletzt genannten Teilschritt kann vorgesehen sein, dass Source-Code eingegeben werden kann. Bevorzugt sind allen auswählbaren Parametern Beschreibungsdateien zugeordnet, die in Schritt e) des gattungsgemäßen Verfahrens zur Erstellung eines zwischen den Instanzen ausführbaren Kommunikationsablaufs verwendet werden.

Die im Zusammenhang mit dem erfindungsgemäßen Verfahren erwähnten bevorzugten Ausführungsformen sind zusammen mit ihren Vorteilen, wie für den Fachmann offensichtlich, auch bei einem erfindungsgemäßen Protokolltester realisierbar.

Weitere vorteilhafte Ausführungsformen ergeben sich aus den Unteransprüchen.

Im Nachfolgenden wird die Erfindung unter Bezugnahme auf die beigefügten Zeichnungen näher beschrieben. Es zeigen:
- Figur 1: ein mit dem aus dem Stand der Technik bekannten Verfahren kreierter Kommunikationsablauf für eine Repetition;
- Figur 2: ein mit dem aus dem Stand der Technik bekannten Verfahren kreierter Kommunikationsablauf, bei dem bei Eintreffen des Ereignisses 2 das Ereig- nis 8 gesendet wird:
- Figur 3: ein mit dem aus dem Stand der Technik bekannten Verfahren kreierter Kommunikationsablauf, bei dem bei Eintreffen des Ereignisses 555 das Er- eignis X gesendet wird;
- Figur 4: ein mit einem beispielhaften Verfahren kreierter Kommunikationsablauf, der im Ergebnis dem Kommunikationsablauf von Figur 1 entspricht;
- Figur 5: ein mit dem erfindungsgemäßen Verfahren kreierter Kommunikationsablauf, der im Ergebnis die Kommunikationsabläufe der Figuren 2 und 3 zusam- menfaßt;
- Figur 6: einen beispielhaften Kommunikationsablauf, der mit einem beispielhaften Verfahren kreiert wurde und der verschiedene Switch-Funktionalitäten dar- stellt; und
- Figur 7: einen mit einem beispielhaften Verfahren kreierten Kommunikationsab- lauf zur Darstellung verschiedener Loop-Funktionalitäten.

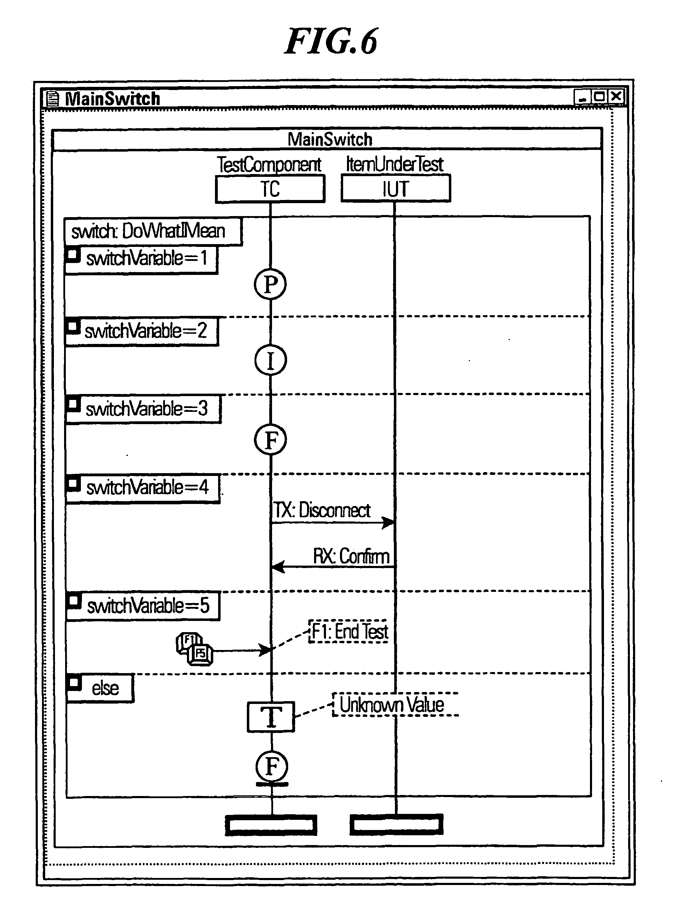

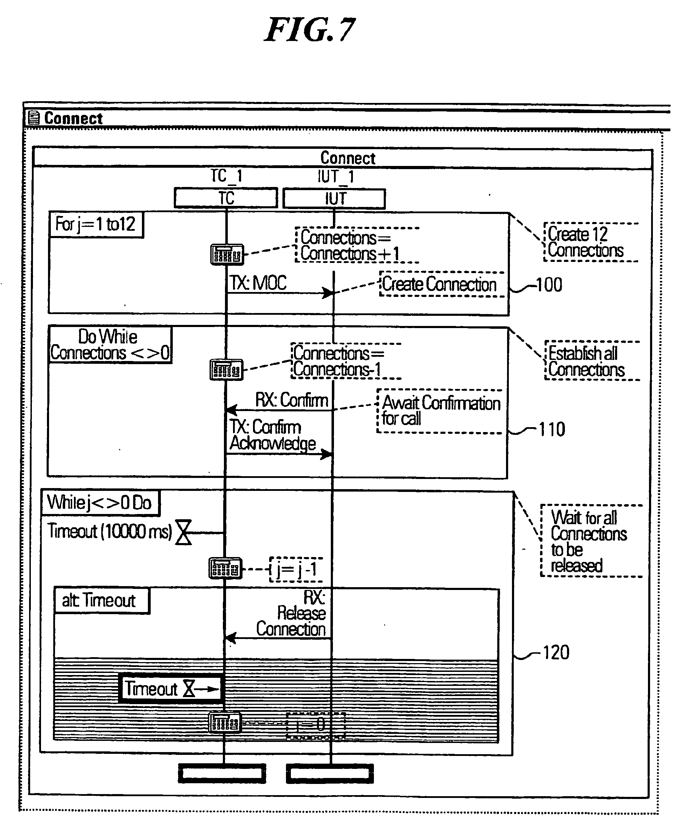

Im Anhang A1 ist ein von dem erfindungsgemäßen Verfahren kreiertes ablauffähiges Skript für die in Figur 6 dargestellte Switch-Funktion angegeben, während in Anhang A2 das nicht zur Erfindung gehörende ablauffähige Skript dargestellt ist, das mit dem in Figur 7 dargestellten Kommunikationsablauf korrespondiert.

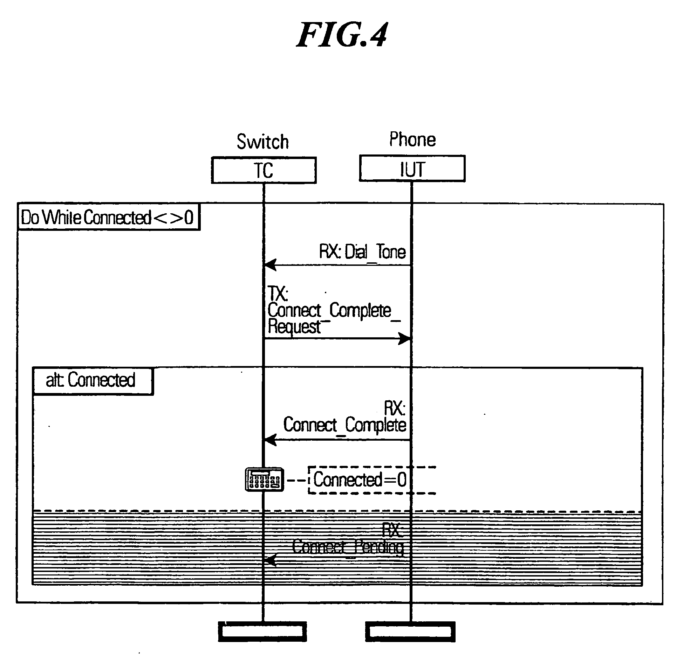

Figur 4 zeigt ein Beispiel für eine Do-While-Schleife, die dieselbe Aufgabe löst wie der in Figur 1 dargestellte Kommunikationsablauf, nur kürzer und wesentlich übersichtlicher. Bei dem in Figur 4 dargestellten Kommunikationsablauf wird der Wert der Variablen "Connected" überprüft. Solange "Connected" ungleich 0 ist, wird auf den nächsten Wählton gewartet und anschließend angefragt, ob der Verbindungsaufbau komplett ist. Sofem diese Frage mit "Ja" zu beantworten ist, wird die Variable "Connected" gleich 0 gesetzt und die Aufgabe ist beendet. Falls dies nicht der Fall ist, wird die Variable "Connected" nicht verändert, so dass die Do-While-Schleife weiterhin durchlaufen wird.

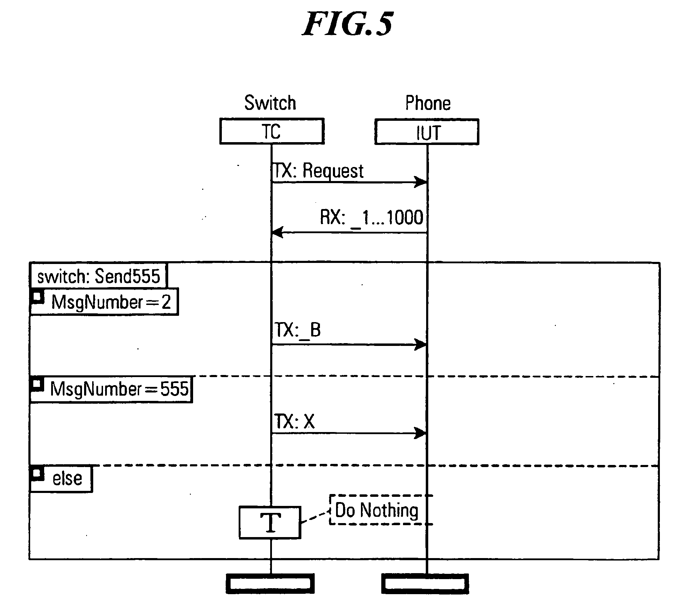

Figur 5 stellt vor, wie die in Zusammenhang mit Figur 2 und Figur 3 beschriebene Auf gaben erfindungsgemäß gelöst wird. Die Instanz TC empfängt nach Senden eines Requests eine Nachricht mit einer Variablen, die einen Wert von 1 bis 1000 haben kann. Bei Empfang einer Nachricht, bei der die Variable MsgNumber den Wert 2 hat, wird eine Nachricht mit der Variablen B gesendet, während bei Empfang einer Nachricht, bei der die MsgNumber den Wert 555 hat, eine Nachricht mit der Variablen X gesendet wird. In allen anderen Fällen ("else") wird lediglich weitergewartet ("T"). Ein nicht zu der Erfindung gehörender Vorteil besteht darin, dass anstelle einer Änderung aller betroffenen Charts lediglich der Variablen B ein anderer Wert zugewiesen wird, so daß künftig anstelle des Ereignisses 8 die Ereignisse 8 und 9 gesendet werden. Diese Zuweisung eines anderen Werts an die Variable B genügt einmalig außerhalb der Charts. Alle Charts können daher unverändert bleiben. Ein weiterer Vorteil besteht darin, daß man im Stand der Technik, vgl. die Figuren 2 und 3, so viele Nachrichten erzeugen musste, wie benötigt werden, um die Messaufgabe zu lösen, vorliegend also 1000. Bei der erfindungsgemäßen Lösung genügt für die vorliegende Messaufgabe die Erzeugung einer einzigen Nachricht.

Figur 6 zeigt ein Beispiel für eine Switch-Case-Funktionalität. In Abhängigkeit der Switch-Variablen werden vom Protokolltester, das heißt der Instanz TC, verschiedene Aktivitäten vorgenommen. Ist die Switch-Variable gleich 1, so wird die Meldung "Passed" ausgegeben. Ist die Switch-Variable 2, so wird die Meldung "Inconclusive", das heißt "nicht stimmig" ausgegeben. Ist die Switch-Variable gleich 3, so wird die Meldung "Failed" ausgegeben. Ist die Switch-Variable 4, so wird ein "Disconnect" gesendet und ein "Confirm" zurückerwartet. Ist die Switch-Variable 5, soll der Benutzer die Taste F1 drücken, um damit den Test zu beenden. Für alle anderen Werte der Switch-Variablen wird ein "Trace Text" angezeigt, anschließend wird ein Verdict, d.h. die Beurteilung des Testfalls, gesetzt und der Test angehalten. Der zugehörige, vom Verfahren erzeugt Code befindet sich im Anhang A1.

Der Switch selbst wird durch die States 2 bis 10 abgehandelt, der State 11 ist der Einsprungspunkt und der State 12 der Endpunkt. Figur 7 zeigt verschiedene nicht zur Erfindung gehörende Beispiele von Loops, wobei die Box 100 dazu dient, 12 Verbindungen zu erzeugen, entsprechend der Vorgabe "For j = 1 to 12". Die Box 110 ist eine Loop-Schleife mit einer Überprüfung am Ende. Die Variable "Connections" wird pro Durchlauf um 1 verringert und die Schleife wird sooft durchlaufen, solange die Variable "Connections" ungleich 0 ist. Bei jedem Durchlauf wartet die Instanz TC auf die Bestätigung eines Anrufs und wenn sie den Anruf erhalten hat, wird eine Anrufbestätigung gesendet.

Die Box 120 zeigt eine Loop-Funktionalität, bei der die Überprüfung am Anfang stattfindet. Solange die Variable j ungleich 0 ist, wird zunächst ein Timeout von 10 Sekunden abgewartet, anschließend die Variable j um 1 vermindert. Für den Fall, dass während des Timeouts eine Verbindung beendet wird, wird ein weiterer Timeout gesetzt und anschließend die Variable j gleich 0 gesetzt. Diese Funktion dient dazu, abzuwarten bis alle Verbindungen freigegeben worden sind. Im Anhang ist der im erfindungsgemäßen Verfahren erzeugte Code abgedruckt Ein derartiger Code kann in einer Forth-Box nicht programmiert werden, da in einer Forth-Box Statustransitionen, wie zum Beispiel auf Seite 12 Zeile 1 oder Seite 12 Zeile 16 des Anhangs nicht möglich sind. Denn bei jedem Kompilat kann sich an den Statusnummem etwas ändern, zum Beispiel durch einen Einschub, der einen neuen Status erfordert, so daß sich die Statusnummem verschieben. Dies hat zur Folge, daß nachfolgende Forth-Boxen nicht mehr funktionieren. In einer Forth-Box kann damehr nur ein kompilatunabhängiger statischer Code eingegeben werden.

### Anhang A1:

```
(***** Tektronix MSC-Linker <V2.3.0> builds scenario 'SwitchDemo' **-*-
 forth -*-**)
 $MSC$_VersionDate c" Oct 29 2002" ;
 CREATE NO_DEFAULT_TM_INSTANCES
 (>>>>>>>>>> Include initialization <<<<<<<<<<)
 include pc:boot:/share/pfe/msc_header.4th
 (>>>>>>>>> Allocation <<<<<<<<<<)
 (create instance variables and constants...)
 1 CONSTANT MSC_NUM_OF_INSTANCES
 CREATE $MSC$_InstanceVars MSC_NUM_OF_INSTANCES $MSC$-ElemSize_InstanceVar *
 $MSC$-Allot&Erase
 CREATE $MSC$_NextStateAddr MSC_NUM_OF_INSTANCES CELLS $MSC$_Allot&Erase \
 allocate memory for nextstate variables
 CREATE $MSC$_DefaultFlagAddr MSC_NUM_OF_INSTANCES CELLS $MSC$_Allot&Erase \
 allocate memory for default state flags
 CREATE $MSC$_DefaultReturnStateAddr MSC_NUM-OF_INSTANCES CELLS
 $MSC$_Allot&Erase \ allocate memory for default state flags
 CREATE $MSC$_DefaultStateAddr MSC_NUM-OF_INSTANCES CELLS $MSC$_Allot&Erase
 \ allocate memory for default states
 (create timer variables and constants...)
 (TM0)
 (create environment function key variables and constants...)
 12 CONSTANT $MSC$_FKEY#
 CREATE $MSC$_FKeyAddr MSC_NUM_OF_INSTANCES $MSC$_FKEY# *
 $MSC$_ElemSize_FKeyVar * $MSC$_Allot&Erase
 (create pool variables and constants...)
 1 CONSTANT MSC_NUM_OF_POOLS
 CREATE $MSC$_PoolVars MSC_NUM_OF_POOLS CELLS $MSC$_Allot&Erase
 (create message variables and constants...)
 2 CONSTANT MSC_NUM_OF_MESSAGES
 CREATE $MSC$_MsgVars MSC_NUH_OF_MESSAGES $MSC$_ElemSize_MsgVar *
 $MSC$-Allot&Erase
 1 CONSTANT MSC_NUM_OF_MSGDECODEVARS (one per TM)
 CREATE $MSC$_HsgDecodeVars MSC_NUM_OF_MSGDECODEVARS
 $MSC$_ElemSize_MsgDecodeVar * $MSC$_Allot&Erase
 2 CONSTANT MSC_NUM_OF_FOLDERS
 CREATE $MSC$_MsgFolderVars MSC_NUM_OF_FOLDERS $MSC$_ElemSize_FolderVar *
 $MSC$_Allot&Erase
 CREATE $MSC$_EventStructureVars MSC_NUM_OF_POOLS MSC_NUM_OF_INSTANCES *
 $MSC$_ElemSize_EventStructurevar * $MSC$_Allot&Erase
 CREATE $MSC$_MsgSizeVars $MSC$_ElemSize_MsgSizeVar $MSC$_Allot&Erase
 variable $MgC$_MsgMatched?
 (create temporary variables and constants...)
 variable $MSC$_TempFolderHandle
 variable $MSC$_PDecoutVar
 CREATE $MSC$_CurHMSCNameStringVar 255 ALLOT
 CREATE $MSC$_TempStringVarAddr0 255 ALLOT
 CREATE $MSC$_TempStringVarAddr1 255 ALLOT
 CREATE $MSC$_TempStringVarAddr2 255 ALLOT
 (create startstate variables...)
 variable $MSC$_Req-State
 (>>>>>>>>>> Test Managers <<<<<<<<<<)
 12 TM_DEF_STATES !
 0 TM_DEF_TIMERS !
 0 $MSC$_TM_CREATE TM0
 (>>>>>>>>>> Constants <<<<<<<<<<)
 (create mapping of gateway name to poolindex)
 0 constant MSC-GW-Gateway_1 \ Mapping Gatewayname 'Gateway_1' -> Poolindex
 '0'
 (create mapping of gateway name to SAP Index)
 0 constant MSC-GW2SAP-Gateway_1 \ Mapping Gatewayname 'Gateway_1' -> SAPIn-
 dex '0'
 (>>>>>>>>>> Variables <<<<<<<<<<)
 variable MSC-VAR-Gateway_1-connid
 variable MSC-VAR-Gateway_1-Send_Sequence_Number_1
 (>>>>>>>>>> Commands <<<<<<<<<<)
 include pc:boot:/share/pfe/msc_lib.4th
 (>>>>>>>>>> MSC ESE Variables <<<<<<<<<<)
 MSC_Var_MSC_String06 MSC_String6 ;
 : MSC_Var_MSC_INT03 MSC_INT3 ;
 : MSC_Var::MSC_String07 MSC_String7 ;
 : MSC_Var::MSC_INT04 MSC_INT4
 : MSC_Var::MSC_String08 MSC_String8 ;
 : MSC_Var_MSC_INT05 MSC_INT5 ;
 : MSC_Var::MSC_String09 MSC_String9 ;
 : MSC_Var_MSC_INT06 MSC_INT6 ;
 : MSC_Var::MSC_INT07 MSC_INT7 ;
 : MSC_Var::MSC_INT08 MSC_INT8 ;
 : MSC_Var::MSC_INT09 MSC_INT9 ;
 MSC_Var_MSC_String01 MSC_String1 ;
 : MSC Var::MSC_String02 MSC_String2 ;
 : MSC_Var::switchVariable MSC_INT0 ;
 : MSC_Var::MSC_String03 MSC_String3 ;
 MSC_Var_MSC_String04 MSC_String4 ;
 : MSC_Var::MSC_INT01 MSC_INT1 ;
 : MSC_Var::MSC_String05 MSC_String5 ;
 MSC_Var_MSC_INT02 MSC_INT2 ;
 MSC_NUM_OF_POOLS $MSC$_PoolPrepareInit
 (constructor word ...)
 : $MSC$_Constructor ( -- )
 0 $MSC$_PoolPrepareStart
 " pc:C:/K1297/MBS-Pools/gsm2pa.pdc " 0 $MSC$_PoolOpen
 " PROT<BSSM> send to EMUL<ss7sccp1>" 0 1 $MSC$_FolderOpen \ pool
 'pc:C:/K1297/MBS-Pools/gsm2pa.pdc'
 " CONFIRM" 0 1 1 $MSC$_MsgVarInit \pool 'pc:C:/K1297/MBS-
 Pools/gsm2pa.pdc'
 " PROT<BSSM> send to EMUL<ss7sccp1>" 0 0 $MSC$_FolderOpen \ pool
 'pc:C:/K1297/MBS-Pools/gsm2pa.pdc'
 " DISCONNECT_SCCP" 0 0 0 $MSC$_MsgVarInit \ poo1 'pc:C:/K1297/MBS-
 Poo1s/gsm2pa.pdc'
 0 $MSC$_PoolPrepareExec
 MSC-VAR-Gateway_1-connid " connid" " PROT<DTAP_MSG> send to E-
 MUL<ss7sccpl>" 0 $MSC$_AssignMSCVar
 MSC-VAR-Gateway1-Send_Sequence_Number_1 " Send_Sequence_Number_1" "
 PROT<DTAP_MSG> send to EMUL<ss7sccp1>" 0 $MSC$_AssignMSCVar
 $MSC$_VerdictInit
 ;
 (destructor word ...)
 : $MSC$_Destructor ( -- )
    $MSC$_CloseA11Poo1s
 ;
 (>>>>>>>>>> Initialization <<<<<<<<<<)
 0 0 $MSC$_InitMsg \ Create k12MBSevent structure for instance 'TestCompo-
 nent' and gateway 'Gateway_1'
 TM0 (>>>>>>>>>> start of instance 'TestComponent' <<<<<<<<<<)
 (Segments of Instance 'TestComponent':
```

| Type | Segment Name | State | Length |
|---|---|---|---|
| NIT | - no name - | 0000000000 | 0000000001 |
| END | - no name - | 0000000001 | 0000000001 |
| DOC | MainSwitch | 0000000002 | 0000000008 |
| CONN | SwitchDemo/Start | 0000000010 | 0000000001 |
| CONN | SwitchDemo/MainSwitch | 0000000001 | 0000000001 |

)

```
 \ ----- init segment -----
 0 STATE_INIT{
  " TM0 starts" " TestComponent: " 2 $MSC$_TraceControl
 $MSC$_TraceMsgArray
  MSC_NUM_OF_INSTANCES $MSC$_VerdictReset \ init verdict
 0 $MSC$_ResetGotoModifierFlag \ init. instance 'TestComponent'
  0 $MSC$_DefaultFlagSet
  0 $MSC$_DefaultStateSet
  (switch command for startstate...)
  $MSC$_Req-State @ CASE
     1 OF 10 NEW_STATE ENDOF
  ENDCASE
 }STATE_INIT
 \ ----- end segment -----
 1 STATE_INIT{
  $MSC$_VerdictEval
  " instance 'TestComponent' stops " $MSC$_PrintString
  " TM0 stops" " TestComponent: " 2 $MSC$_TraceControl
 $MSC$_TraceMsgArray
 }STATE_INIT
 1 STATE{
   (this is the end state - loop forever)
 }STATE
 \ ----- document segment 'MainSwitch' -----
 2 STATE_INIT{
 (start Switch 'DoWhatIMean')
 $MSC$_ReturnStackAlmostFull? IF
     v. " Error: Infinite recursion occured in State 2 " vcr
     EXIT THEN
   (MSC_INTO = 1 IF)
  MSC_INT0 @
  1
  = IF
   3 0 $MSC$_NewState EXIT
     THEN
   (MSC_INTO = 2 IF)
  MSC_INTO @
  2
  = IF
     4 0 $MSC$_NewState EXIT
   (MSC_INTO = 3 IF)
  MSC_INT0 @
  3
  = IF
     5 0 $MSC$_NewState EXIT
     THEN
   (MSC_INTO = 4 IF)
  MSC_INT0 @
  4
  = IF
     6 0 $MSC$_NewState EXIT
     THEN
   (MSC_INTO = 5 IF)
  MSC_INT0 @
  5
  = IF
     8 0 $MSC$_NewState EXIT
     THEN
   (else)
  TRUE IF
     9 0 $MSC$_NewState EXIT
     THEN
 (end Switch 'DoWhatIMean')
 }STATE_INIT
 3 STATE_INIT{
  " Verdict set to value 'pass'." " MainSwitch/TestComponent: " 2
 $MSC$_TraceVerdict $MSC$_TraceMsgArray
  $MSC$_VerdictPass
  $MSC$_DefaultFlagGet 0= IF
     0 $MSC$_GetNextState 0 $MSC$_NewState
  ELSE
     $MSC$_ReturnDefaultChart
  THEN
 }STATE_INIT
 4 STATE_INIT{
   " Verdict set to value 'inconclusive'." " MainS-
 witch/TestComponent: " 2 $MSC$_TraceVerdict $MSC$_TraceMsgArray
  $MSC$-VerdictInconc
  $MSC$_DefaultFlagGet 0= IF
     0 $MSC$_GetNextState 0 $MSC$_NewState
  ELSE
     $MSC$_ReturnDefaultChart
  THEN
 }STATE_INIT
 5 STATE_INIT{
   " Verdict set to value 'fail'." " MainSwitch/TestComponent: " 2
 $MSC$_TraceVerdict $MSC$_TraceMsgArray
  $MSC$_VerdictFail
   $MSC$_DefaultFlagGet 0= IF
     0 SMSC$_GetNextState 0 $MSC$_NewState
  ELSE
     $MSC$_ReturnDefaultChart
  THEN
 }STATE_INIT
 6 STATE_INIT{
   " Send message 'DISCONNECT' ('PROT<BSSM> send to
 EMUL<ss7sccp1>/DISCONNECT_SCCP') to gateway 'Gateway_1' " " MainS-
 witch/TestComponent: " 2 $MSC$_TraceSend $MSC$_TraceMsgArray
   " DISCONNECT" 0 0 0 $MSC$_SendPrimitive
  7 0 $MSC$_NewState
 }STATE_INIT
 7 STATE{
 " CONFIRM" 1 0 0 $MSC$_RecvPrimitive
 ACTION{
  " Received message 'CONFIRM' ('PROT<BSSM> send to
 EMUL<ss7sccpl>/CONFIRM') from gateway 'Gateway_1' " " MainS-
 witch/TestComponent: " 2 $MSC$_TraceReceive $MSC$_TraceMsgArray
  0 0 1 $MSC$_FreeEventStructure \ free event structure of message
 'CONFIRM' ('PROT<BSSM> send to EMUL<ss7sccp1>/CONFIRM') and gateway 'Gate-
 way_1'
  1 $MSC$_ResetMsgFlag \ message 'CONFIRM' ('PROT<BSSM> send to E-
 MUL<ss7sccpl>/CONFIRM') from gateway 'Gateway_1'
  0 $MSC$_ResetGotoModifierFlag
  $MSC$_DefaultFlagGet 0= IF
     0 $MSC$_GetNextState 0 $MSC$_NewState
  ELSE
     $MSC$_ReturnDefaultChart
  THEN
 } ACTION
 TRUE
 ACTION{
  0 0 1 $MSC$_FreeEventStructure \ free event structure of message
 'CONFIRM' ('PROT<BSSM> send to EMUL<ss7sccpl>/CONFIRM') and gateway 'Gate-
 way_1'
  $MSC$_CallDefaultChart
 }ACTION
 }STATE
 8 STATE{
 1 $MSC$-FKey?
 ACTION{
  " Received environment input FK1 " " MainSwitch/TestComponent: " 2
 $MSC$_TraceEnvironment $MSC$_TraceMsgArray
  1 $MSC$_ResetFKeyFlag
  0 $MSC$_ResetGotoModifierFlag
  $MSC$_DefaultFlagGet 0= IF
     0 $MSC$_GetNextState 0 $MSC$_NewState
  ELSE
     $MSC$_ReturnDefaultChart
  THEN
 }ACTION
 TRUE
 ACTION{
  $MSC$_CallDefaultChart
 }ACTION
 }STATE
 9 STATE_INIT{
  " Unknown Value " " MainSwitch/TestComponent: " 2 $MSC$_TraceUser
 $MSC$_TraceMsgArray
   " verdict set to value 'fail'." " MainSwitch/TestComponent: " 2
 $MSC$_TraceVerdict $MSC$_TraceMsgArray
  $MSC$_VerdictFail
  $MSC$_CurHMSCNameStringVar " TestComponent: " 2
 $MSC$_TraceControl $MSC$_TraceMsgArray
  1 0 $MSC$_SetNextState
  1 0 $MSC$_NewState
  EXIT
  $MSC$_DefaultFlagGet 0= IF
     0 $MSC$_GetNextState 0 $MSC$_NewState
  ELSE
     $MSC$_ReturnDefaultChart
   THEN
 }STATE_INIT
 \ ----- connector segment 'SwitchDemo/Start' -----
 10 STATE_INIT{
 " Execution of HMSC 'SwitchDemo' started" " TestComponent: " 2
 $MSC$_TraceControl $MSC$_TraceMsgArray
 " SwitchDemo' finished" $MSC$_CurHMSCNameStringVar $MSC$_!String
 " Execution of HMSC ' " $MSC$_CurHMSCNameStringVar
 $MSC$_TempStringVarAddr0 $MSC$_StrCat
 11 0 $MSC$_SetNextState
 2 0 SMSC$_NewState
 }STATE_INIT
 \ ----- connector segment 'SwitchDemo/MainSwitch' -----
 11 STATE_INIT{
 " Execution of HMSC 'SwitchDemo' finished" " TestComponent: " 2
 $MSC$_TraceControl $MSC$_TraceMsgArray
 1 0 $MSC$_SetNextState
 1 0 $MSC$_NewState.
 }STATE_INIT
 (>>>>>>>>>>> end of instance 'TestComponent' <<<<<<<<<<)
 $MSC$_Constructor
 MSC_MENU_CTRL_FCT (calls the menu control function)
 " MSC scenario 'SwitchDemo' loaded" $MSC$_PrintString
```

### Anhang A2:

```
(***** Tektronix MSC-Linker <V2.3.0> builds scenario 'Loo_Demo' **-*-
 forth -*-**)
 : $MSC$_VersionDate c" Oct 29 2002" ;
 CREATE NO_DEFAULT_TM_INSTANCES
 (>>>>>>>>>> Include initialization <<<<<<<<<<)
 include pc:boot:/share/pfe/msc_header.4th
 (>>>>>>>>>> Allocation <<<<<<<<<<)
 (create instance variables and constants...)
 1 CONSTANT MSC_NUM_OF_INSTANCES
 CREATE $MSC$_InstanceVars MSC_NUM_OF_INSTANCES $MSC$_ElemSize_InstanceVar *
 $MSC$_Allot&Erase
 CREATE $MSC$_NextStateAddr MSC_NUM_OF_INSTANCES CELLS $MSC$_Allot&Erase \
 allocate memory for nextstate variables
 CREATE $MSC$_DefaultFlagAddr MSC_NUM_OF_INSTANCES CELLS $MSC$_Allot&Erase \
 allocate memory for default state flags
 CREATE $MSC$_DefaultReturnStateAddr MSC_NUM_OF_INSTANCES CELLS
 $MSC$_Allot&Erase \ allocate memory for default state flags
 CREATE $MSC$_DefaultStateAddr MSC_NUH_OF_INSTANCES CELLS $MSC$_Allot&Erase
 \ allocate memory for default states
 (create timer variables and constants...)
 (TM0)
 0 10000 $MSC$_Timer_CREATE MSC_Timer::Timeout
 (create environment function key variables and constants...)
 12 CONSTANT $MSC$_FKEY#
 CREATE $MSC$_FKeyAddr MSC_NUM_OF_INSTANCES $MSC$_FKEY# *
 $MSC$_ElemSize_FKeyVar * $MSC$_Allot&Erase
 (create pool variables and constants...)
 1 CONSTANT MSC_NUM_OF_POOLS
 CREATE $MSC$_PoolVars MSC_NUM_OF_POOLS CELLS $MSC$_Allot&Erase
 (create message variables and constants...)
 2 CONSTANT MSC_NUM_OF_MESSAGES
 CREATE $MSC$_MsgVars MSC_$UM_OF_MESSAGES $MSC$_ElemSize_MsgVar *
 $MSC$_Allot&Erase
 1 CONSTANT MSC_NUM_OF_MSGDECODEVARS (one per TM)
 CREATE $MSC$_MsgDecodeVars MSC_NUM_OF_MSGDECODEVARS
 $MSC$_ElemSize_MsgDecodeVar * $MSC$_Allot&Erase
 2 CONSTANT MSC_NUM_OF_FOLDERS
 CREATE $MSC$_MsgFolderVars MSC_NUM_OF_FOLDERS $MSC$_ElemSize_FolderVar *
 $MSC$_Allot&Erase
 CREATE $MSC$_EventStructureVars MSC_NUM_OF_POOLS MSC_NUM_OF_INSTANCES *
 $MSC$_ElemSize_EventStructureVar * $MSC$_Allot&Erase
 CREATE $MSC$_MsgSizeVars $MSC$_ElemSize_MsgSizeVar $MSC$_Allot&Erase
 variable $MSC$_Msgmatched?
 (create temporary variables and constants...)
 variable $MSC$_TempFolderHandle
 variable $MSC$_PDecoutVar
 2 CONSTANT MSC_NUM_OF_TMPVARS
 CREATE $MSC$_TmpVars MSC_NUM_OF_TMPVARS CELLS $MSC$_Allot&Erase
 CREATE $MSC$_CurHMSCNameStringVar 255 ALLOT
 CREATE $MSC$_TempStringVarAddr0 255 ALLOT
 CREATE $MSC$_TempStringVarAddr1 255 ALLOT
 CREATE $MSC$_TempStringVarAddr2 255 ALLOT
 (create startstate variables...)
 variable $MSC$_Req-State ,
 (>>>>>>>>>> Test Managers <<<<<<<<<<)
 17 TM_DEF_STATES !
 1 TM_DEF_TIMERS !
 0 $MSC$_TM_CREATE TM0
 ( >>>>>>>>>> Constants <<<<<<<<<< )
 ( create mapping of gateway name to poolindex )
 0 constant MSC-GW-Gateway_1 \ Mapping Gatewayname 'Gateway_1' -> Poolindex
 '0'
 ( create mapping of gateway name to SAP Index )
 0 constant MSC-GW2SAP-Gateway_1 \ Mapping Gatewayname 'Gateway_1' -> SAPIn-
 dex '0'
 ( >>>>>>>>>> Variables <<<<<<<<<< )
 variable MSC-VAR-Gateway_1-Service_Key_1
 ( >>>>>>>>>> Commands <<<<<<<<<< )
 include pc:boot:/share/pfe/msc_lib.4th
 ( >>>>>>>>>> MSC ESE Variables <<<<<<<<<< )
 : MSC_Var::MSC_String06 MSC_String6 ;
 : MSC_Var::MSC_INT03 MSC_INT3 ;
 : MSC_Var::MSC_String07 MSC_String7 ;
 : MSC_Var::MSC_INT04 MSC_INT4 ;
 : MSC_Var::MSC_String08 MSC_String8 ;
 : MSC_Var::MSC_INT05 MSC_INT5 ;
 : MSC_Var::MSC_String09 MSC_String9 ;
 : MSC_Var::MSC_INT06 MSC_INT6 ;
 : MSC_Var::MSC_INT07 MSC_INT7 ;
 : MSC_Var:: j MSC_INT0 ;
 : MSC_Var::MSC_INT08 MSC_INT8 ;
 : MSC_Var::MSC_INT09 MSC_INT9 ;
 : MSC_Var::Connections MSC_INT1 ;
 : MSC_Var::MSC_Strring01 MSC_String1 ;
 : MSC_Var::MSC_String02 MSC_String2 ;
 : MSC_Var::MSC_String03 MSC_String3 ;
 : MSC_Var::MSC_String04 MSC_String4 ;
 : MSC_Var::MSC_String05 MSC_String5 ;
 : MSC_Var::MSC_INT02 MSC_INT2 ;
 MSC_NUM_OF_POOLS $MSC$_PoolPrepareInit
 ( constructor word ... )
 : $MSC$_Constructor ( -- )
 0 $MSC$_PoolPrepareStart
 " pc:C:/K1297/MBS-Pools/camel1a.pdc" 0 $MSC$_PoolOpen
 " PROT<CAP> send to EMUL<ss7sccp1>" 0 1 $MSC$_FolderOpen \ pool
 'pc:C:/K1297/MBS-Pools/camel1a.pdc'
 " SCCP_END_Connect" 0 1 1 $MSC$_MsgVarInit \ pool 'pc:C:/K1297/MBS-
 Pools/camella.pdc'
 " PROT<CAP> send to EMUL<ss7sccp1>" 0 0 $MSC$_FolderOpen \ pool
 'pc:C:/K1297/MBS-Pools/camella.pdc'
 " SCCP_START" 0 0 0 $MSC$_MsgVarInit \ pool 'pc:C:/K1297/MBS-
 Pools/camel1a.pdc'
 0 $MSC$_PoolPrepareExec
 MSC-VAR-Gateway_1-Service_Key_1 " Service_Key_1" " PROT<CAP> send to
 EMUL<ss7sccp1>" 0 $MSC$_AssignMSCVar
 $MSC$_VerdictInit
 ( destructor word ... )
 : $MSC$_Destructor ( -- )
     $MSC$_CloseAllPools
 ;
 ( >>>>>>>>>> Initialization <<<<<<<<<< )
 0 0 $MSC$_InitMsg \ Create k12MBSevent structure for instance 'TC_1' and
 gateway 'Gateway_1'
 TM0 ( >>>>>>>>>> start of instance 'TC_1' <<<<<<<<<< )
 ( Segments of Instance 'TC_1':
```

| Type | Segment Name | State | Length |
|---|---|---|---|
| INIT | - no name - | 0000000000 | 0000000001 |
| END | - no name - | 0000000001 | 0000000001 |
| DOC | Connect | 0000000002 | 0000000013 |
| CONN | Loo_Demo/Start | 0000000015 | 0000000001 |
| CONN | Loo_Demo/Connect | 0000000016 | 0000000001 |

```
                                                    )
 \ ----- init segment -----
 0 STATE_INIT{
  " TM0 starts" " TC_1: " 2 $MSC$_TraceControl $MSC$_TraceMsgArray
  MSC_NUM_OF_INSTANCES $MSC$_VerdictReset \ init verdict
  0 $MSC$_ResetGotoModifierFlag \ init. instance 'TC_1'
  0 $MSC$_DefaultFlagSet
  0 $MSC$_DefaultStateSet
  MSC_Timer::Timeout $MSC$_Timer_Init \ init. timer 'Timeout'
   ( switch command for startstate... )
  $MSC$_Req-State @ CASE
     1 OF 15 NEW_STATE ENDOF
  ENDCASE
 }STATE_INIT
 \ ----- end segment -----
 1 STATE_INIT{
  $MSC$_VerdictEval
  " instance 'TC_1' stops" $MSC$_PrintString
  " TM0 stops" " TC_1: " 2 $MSC$_TraceControl $MSC$_TraceMsgArray
 }STATE_INIT
 1 STATE{
  ( this is the end state - loop forever )
 }STATE
 \ ----- document segment 'Connect' -----
 2 STATE_INIT{
  12 MSC_INT0 !
  12 0 $MSC$_DefaultFlagGet + $MSC$_SetTmpVar
  3 0 $MSC$_NewState
 }STATE_INIT
 3 STATE_INIT{
  " Desktop Calculator 'Connections = Connections + 1' start " "
 Connect/TC_1: " 2 $MSC$_TraceDCalculator $MSC$-TraceMsgArray
   ( start Desktop Calculator 'Connections = Connections + 1' )
     ( Connections = Connections + 1 )
   MSC_INT1 @
     1
     $MSC$_+
     MSC_INT1 !
   ( end Desktop Calculator 'Connections = Connections + 1' )
   " Desktop Calculator 'Connections = Connections + 1' end " " Con-
 nect/TC_1: " 2 $MSC$_TraceDCalculator $MSC$_TraceMsgArray
   " Send message 'MOC' ('PROT<CAP> send to
 EMUL<ss7sccp1>/SCCP_START') to gateway 'Gateway_1' " " Connect/TC_1: " 2
 $MSC$_TraceSend $MSC$_TraceMsgArray
   " MOC" 0 0 0 $MSC$_SendPrimitive
   4 0 $MSC$-NewState
 }STATE_INIT
 4 STATE_INIT{
 $MSC$_ReturnStackAlmostFull? IF
   " WARNING: Infinite recursion occured in repetition in chart 'Con-
 nect' - continue with next state..."
   0 $MSC$_GetNextState 0 $MSC$_NewState EXIT
 THEN
  MSC_INT0 @ 1 - MSC_INT0 !
  MSC_INT0 @ 0 <> IF
     3 0 $MSC$_lewState EXIT
  ELSE
     5 0 $MSC$_NewState EXIT
  THEN
 }STATE_INIT
 5 STATE_INIT{
  6 0 $MSC$_NewState
 }STATE_INIT
 6 STATE_INIT{
   " Desktop Calculator 'Connections = Connections - 1' start " "
 Connect/TC_1: " 2 $MSC$_TraceDCalculator $MSC$_TraceMsgArray
   ( start Desktop Calculator 'Connections = Connections - 1' )
     ( Connections = Connections - 1 )
     MSC_INT1 @
     1
     $MSC$_-
     MSC_INT1 !
   ( end Desktop Calculator 'Connections = Connections - 1' )
   " Desktop Calculator 'Connections = Connections - 1' end " " Con-
 nect/TC_1: " 2 $MSC$_TraceDCalculator $MSC$_TraceMSgArray
  7 0 $MSC$_NewState
 }STATE_INIT
 7 STATE{
 " Confirm" 1 0 0 $MSC$_RecvPrimitive
 ACTION{
   " Received message 'Confirm' ('PROT<CAP> send to
 EMUL<ss7sccp1>/SCCP_END_Connect') from gateway 'Gateway_1' " " Con-
 nect/TC_1: " 2 $MSC$_TraceReceive $MSC$-TraceMsgArray
  0 0 1 $MSC$_FreeEventStructure \ free event structure of message
 'Confirm' ('PROT<CAP> send to EMUL<ss7sccp1>/SCCP_END_Connect') and gateway
 'Gateway_1'
  1 $MSC$_ResetMsgFlag \ message 'Confirm' ('PROT<CAP> send to E-
 MUL<ss7s_ccp1>/SCCP_END_Connect') from gateway 'Gateway_1'
 0 $MSC$_ResetGotoModifierFlag
   " Send message 'ConfirmAcknowledge' ('PROT<CAP> send to E-
 MUL<ss7sccp1>/SCCP_START') to gateway 'Gateway_1' " " Connect/TC_1: " 2
 $MSC$_TraceSend $MSC$_TraceMsgArray
   " ConfirmAcknowledge" 0 0 0 $MSC$_SendPrimitive
   8 0 $MSC$-NewState
 }ACTION
 TRUE
 ACTION{
   0 0 1 $MSC$_FreeEventStructure \ free event structure of message
 'Confirm' ('PROT<CAP> send to EMUL<ss7sccp1>/SCCP_END_Connect') and gateway
 'Gateway_1'
   $MSC$_CallDefaultChart
 }ACTION
 }STATE
 8 STATE_INIT{
 $MSC$_ReturnStackAlmostFull? IF
   " WARNING: Infinite recursion occured in repetition in chart 'Con-
 nect' - continue with next state..."
   0 $MSC$_GetNextState 0 $MSC$_NewState EXIT
 THEN
   MSC_INT1 @ 0 <> IF
     6 0 $MSC$_NewState EXIT
   ELSE
     9 0 $MSC$_NewState EXIT
   THEN
 }STATE_INIT
 9 STATE_INIT{
   14 0 $MSC$_NewState
 }STATE_INIT
 10 STATE_INIT{
   " Timer 'Timeout' set with value 10000" " Connect/TC_1: " 2
 $MSC$_TraceTimer $MSC$_TraceMsgArray
   10000 MSC_Timer::Timeout $MSC$_Timer_RunTime !
   MSC_Timer::Timeout $MSC$_Timer_Start \ timer 'Timeout'
   " Desktop Calculator 'j = j - 1' start " " Connect/TC_1: " 2
 $MSC$_TraceDCalculator $MSC$_TraceMsgArray
   ( start Desktop Calculator 'j = j - 1' )
     ( j = j - 1 )
     MSC_INT0 @
     1
     $MSC$_-
     MSC_INT0 !
   ( end Desktop Calculator 'j = j - 1' )
   " Desktop Calculator 'j = j - 1' end " " Connect/TC_1: " 2
 $MSC$_TraceDCalculator $MSC$_TraceMsgArray
   11 0 $MSC$_NewState
 }STATE_INIT'
 11 STATE_INIT{
   1 $MSC$_ResetMsgFlag \ message 'ReleaseConnection' ( 'PROT<CAP>
 send to EMUL<ss7sccp1>/SCCP_END_Connect' ) from gateway 'Gateway_1'
 }STATE_INIT
 11 STATE{
 " ReleaseConnection" 1 0 0 $MSC$_RecvPrimitive
 ACTION{
   0 0 1 $MSC$_FreeEventStructure \ free event structure of message
 'ReleaseConnection' ( 'PROT<CAP> send to EMUL<ss7sccp1>/SCCP_END_Connect' )
 and gateway 'Gateway_1'
   0 $MSC$_SetGotoModifierFlag
   12 0 $MSC$-NewState
 }ACTION
 " TC_1" " Timeout " MSC_Timer::Timeout $MSC$_Timer_Timeout?
 ACTION{
   0 0 1 $MSC$_FreeEventStructure \ free event structure of message
 'ReleaseConnection' ( 'PROT<CAP> send to EMUL<ss7sccp1>/SCCP_END_Connect' )
 and gateway 'Gateway_1'
   0 $MSC$_SetGotoModifierFlag
   13 0 $MSC$_NewState
 }ACTION
 TRUE
 ACTION{
  0 0 1 $MSC$_FreeEventStructure \ free event structure of message
 'ReleaseConnection' ( 'PROT<CAP> send to EMUL<ss7sccp1>/SCCP_END_Connect' )
 and gateway 'Gateway_1'
  $MSC$_CallDefaultChart
 }ACTION
 }STATE
 12 STATE{
 " ReleaseConnection" 1 0 0 $MSC$_RecvPrimitive
 ACTION{
  " Received message 'ReleaseConnection' ( 'PROT<CAP> send to
 EMUL<ss7sccp1>/SCCP_END_Connect' ) from gateway 'Gateway_1' " " Con-
 nect/TC_1: " 2 $MSC$_TraceReceive $MSC$_TraceMsgArray
  0 0 1 $MSC$_FreeEventStructure \ free event structure of message
 'ReleaseConnection' ( 'PROT<CAP> send to EMUL<ss7sccp1>/SCCP_END_Connect' )
 and gateway 'Gateway_1'
  1 $MSC$_ResetMsgFlag \ message 'ReleaseConnection' ( 'PROT<CAP>
 send to EMUL<ss7sccp1>/SCCP_END_Connect' ) from gateway 'Gateway_1'
  0 $MSC$_ResetGotoModifierFlag
  14 0 $MSC$-NewState
 }ACTION
 TRUE
 ACTION{
  0 0 1 $MSC$_FreeEventStructure \ free event structure of message
 'ReleaseConnection' ( 'PROT<CAP> send to EMUL<ss7sccp1>/SCCP_END_Connect' )
 and gateway 'Gateway_1'
  $MSC$_CallDefaultChart
 }ACTION
 }STATE
 13 STATE{
 " TC_1" " Timeout" MSC_Timer::Timeout $MSC$_Timer_Timeout?
 ACTION{
  " Received timeout 'Timeout' " " Connect/TC_1: " 2
 $MSC$_TraceTimer $MSC$_TraceMsgArray
  0 $MSC$-ResetGotoModifierFlag
  " Desktop Calculator 'j = 0' start " " Connect/TC_1: " 2
 $MSC$_TraceDCalculator $MSC$_TraceMsgArray
   ( start Desktop Calculator 'j = 0' )
     ( j = 0 )
     0
     MSC_INT0 !
   ( end Desktop Calculator 'j = 0' )
  " Desktop Calculator 'j = 0' end " " Connect/TC_1: " 2
 $MSC$_TraceDCalculator $MSC$_TraceMsgArray
  14 0 $MSC$_NewState
 }ACTION
 TRUE
 ACTION{
  $MSC$_CallDefaultChart
 }ACTION
 }STATE
 14 STATE_INIT{
 $MSC$_ReturnStackAlmostFull? IF
   " WARNING: Infinite recursion occured in repetition in chart 'Con-
 nect' - continue with next state... "
  0 $MSC$_GetNextState 0 $MSC$_NewState EXIT
 THEN
  MSC_INT0 @ 0 <> IF
     10 0 $MSC$-NewState EXIT
  ELSE
     $MSC$_DefaultFlagGet 0= IF
       0 $MSC$-GetNextState 0 $MSC$_NewState EXIT
     ELSE
       $MSC$-ReturnDefaultChart EXIT
     THEN
   THEN
 }STATE_INIT
 \ ----- connector segment 'Loo_Demo/Start' -----
 15 STATE_INIT{
 " Execution of HMSC 'Loo_Demo' started" " TC_1: " 2
 $MSC$-TraceControl $MSC$_TraceMsgkrray
 " Loo_Demo' finished" $MSC$_CurHMSCNameStringVar $MSC$_!String
 " Execution of HMSC ' " $MSC$_CurHMSCNameStringVar
 $MSC$_TempStringVarAddr0 $MSC$_StrCat
 16 0 $MSC$_SetNextState
 2 0 $MSCS_NewState
 }STATE_INIT
 \ ----- connector segment 'Loo_Demo/Connect' -----
 16 STATE_INIT{
 " Execution of HMSC 'Loo_Demo' finished" " TC_1: " 2
 $MSC$-TraceControl $MSC$_TraceMsgArray
 1 0 SMSC$ SetNextState
 1 0 $MSC$_NewState
 }STATE_INIT
 ( >>>>>>>>>> end of instance 'TC-1' <<<<<<<<<< )
 $MSC$_Constructor
 MSC_MENU_CTRL_FCT ( calls the menu control function )
 " MSC scenario 'Loo_Demo' loaded' $MSC$_PrintString
```

## Patentansprüche

1. Verfahren zum Erstellen eines Ablaufs einer zwischen mindestens zwei Instanzen ablaufenden Kommunikation, wobei eine Instanz ein Protokolltester ist, wobei folgende Schritte am Protokolltester ausgeführt werden:
a) Auswählen der an der Kommunikation beteiligten Instanzen;
b) Auswählen einer Protokollschicht, auf deren Grundlage die Kommunikation zwischen den ausgewählten Instanzen ablaufen soll;
c) Auswählen derjenigen abstrakten Kommunikationsschnittstellen der Protokollschicht, die an der Kommunikation beteiligt sind;
d) Auswählen der Kommunikationsdaten;
e) Erstellen eines zwischen den mindestens zwei Instanzen ausführbaren Kommunikationsablaufs durch den Protokolltester auf der Grundlage der Auswahlen in den Schritten a) bis d),
wobei die Auswahl von Schritt d) graphisch erfolgt und den dabei auswählbaren Parametern Beschreibungsdateien zugeordnet sind, die in Schritt e) zur Erstellung eines zwischen den Instanzen ausführbaren Kommunikationsablaufs verwendet werden, wobei Schritt d) den graphischen Aufbau einer Kommunikationsabfolge zwischen den beteiligten Instanzen umfaßt,
**gekennzeichnet durch** folgenden Schritt:
graphisches Festlegen innerhalb der Kommunikationsdaten **durch** einen Benutzer von:
erstens, zumindest einer Nachricht, die zumindest eine Variable enthält, der ein Inhalt zugeordnet werden kann, und wobei die Nachricht von einer zu testenden Instanz an den Protokolltester gesendet werden soll, und
zweitens von Aktivitäten, die beim Empfang der zumindest einen Nachricht in Abhängigkeit möglicher Inhalte der zumindest einen Variablen in der erhaltenen Nachricht **durch** den Protokolltester ausgeführt werden sollen.

2. Verfahren nach Anspruch 1,
**gekennzeichnet durch**:
Spezifizieren **durch** einen Benutzer einer Switch-Case-Funktionalität, die der Protokolltester in Abhängigkeit des Inhalts der Variablen in der erhaltenen Nachricht ausführt.

3. Verfahren nach Anspruch 1 oder 2,
**gekennzeichnet durch**:
Spezifizieren **durch** einen Benutzer einer Loop-Funktionalität, die der Protokolltester in Abhängigkeit des Inhalts der Variablen in der erhaltenen Nachricht ausführt.

4. Verfahren nach einem der vorhergehenden Ansprüche,
**gekennzeichnet durch**:
Spezifizieren **durch** einen Benutzer einer Jump- bzw. GoTo-Funktionalität und/oder einer If-Then-Funktionalität, die der Protokolltester in Abhängigkeit des Inhalts der Variablen in der erhaltenen Nachricht ausführt.

5. Verfahren nach einem der vorhergehenden Ansprüche,
**dadurch gekennzeichnet,**
**dass** weiterhin in Schritt a) die an der Kommunikation beteiligten Instanzen graphisch ausgewählt werden und/oder in Schritt b) die Protokollschicht graphisch ausgewählt wird und/oder in Schritt c) die abstrakten Kommunikationsschnittstellen der Protokollschicht graphisch ausgewählt werden, wobei den dabei auswählbaren Parametern Beschreibungsdateien zugeordnet sind, die in Schritt e) zur Erstellung eines zwischen den Instanzen ausführbaren Kommunikationsablaufs verwendet werden.

6. Verfahren nach einem der vorhergehenden Ansprüche,
**dadurch gekennzeichnet,**
**dass** die abstrakten Kommunikationsschnittstellen SAPs (Service Access Points) umfassen.

7. Verfahren nach einem der vorhergehenden Ansprüche,
**dadurch gekennzeichnet,**
**dass** die Kommunikationsdaten PDUs (Protocol Data Units) und/oder ASPs (Abstract Service Primitives) umfassen.

8. Verfahren nach einem der vorhergehenden Ansprüche,
**dadurch gekennzeichnet,**
**dass** Schritt d) folgende Teilschritte umfaßt:
d1) graphisches Auswählen eines Datenformats;
d2) graphischer Aufbau einer Kommunikationsabfolge zwischen den beteiligten Instanzen.

9. Verfahren nach Anspruch 8,
**dadurch gekennzeichnet,**
**dass** in Schritt d2) Source-Code eingebbar ist.

10. Verfahren nach einem der vorhergehenden Ansprüche,
**dadurch gekennzeichnet,**
**dass** allen auswählbaren Parametern Beschreibungsdateien zugeordnet sind, die in Schritt e) zur Erstellung eines zwischen den Instanzen ausführbaren Kommunikationsablaufs verwendet werden.

11. Protokolltester mit
a) Mitteln zum Auswählen der an einer Kommunikation beteiligten Instanzen, wobei eine der Instanzen der Protokolltester ist;
b) Mitteln zum Auswählen einer Protokollschicht, auf deren Grundlage die Kommunikation zwischen den ausgewählten Instanzen ablaufen soll;
c) Mitteln zum Auswählen derjenigen abstrakten Kommunikationsschnittstellen der Protokollschicht, die an der Kommunikation beteiligt sind;
d) Mitteln zum Auswählen der Kommunikationsdaten;
e) Mitteln zum automatischen Erstellen eines zwischen den Instanzen ausführbaren Kommunikationsablaufs durch den Protokolltester, auf der Grundlage der Auswahlen gemäß a) bis d),
wobei die Auswahlmittel gemäß d) graphische Auswahlmittel sind und den durch sie auswählbaren Parametem Beschreibungsdateien zugeordnet sind, die gemäß e) von den Erstellungsmitteln zur Erstellung eines zwischen den Instanzen ausführbaren Kommunikationsablaufs verwendbar sind,
wobei die Mittel zum Auswählen der Kommunikationsdaten den graphischen Aufbau einer Kommunikationsabfolge zwischen den beteiligten Instanzen ermöglichen,
**dadurch gekennzeichnet,**
**dass** die Mittel zum Auswählen der Kommunikationsdaten ausgelegt sind zum graphisches Festlegen innerhalb der Kommunikationsdaten durch einen Benutzer von:
erstens, zumindest einer Nachricht, die zumindest eine Variable enthält, der ein Inhalt zugeordnet werden kann, und wobei die Nachricht von einer zu testenden Instanz an den Protokolltester gesendet werden soll, und
zweitens von Aktivitäten, die beim Empfang der zumindest einen Nachricht in Abhängigkeit möglicher Inhalte der zumindest einen Variablen in der erhaltenen Nachricht durch den Protokolltester ausgeführt werden soll.

## Claims

1. A method for creating a sequence of a communication proceeding between at least two instances, wherein one instance is a protocol tester, wherein the following steps are executed on the protocol tester:
a) selecting the instances involved in the communication;
b) selecting a protocol layer, on the basis of which the communication between the selected instances is to proceed;
c) selecting those abstract communication interfaces of the protocol layer, which are involved in the communication;
d) selecting the communication data;
e) creating a communication sequence executable between the at least two instances by the protocol tester based on the selections in steps a) to d),
wherein the selection of step d) is effected graphically and description files are associated with the parameters selectable therein, which are used for creating a communication sequence executable between the instances in step e), wherein step d) includes the graphical establishment of a communication sequence between the involved instances,
**characterized by** the following step:
within the communication data, graphically specifying by a user:
first, at least one message containing at least one variable, with which content can be associated, and wherein the message is to be sent from an instance to be tested to the protocol tester, and
secondly, activities, which are to be executed by the protocol tester upon reception of the at least one message depending on possible contents of the at least one variable in the received message.

2. The method according to claim 1,
**characterized by**:
specifying a switch case functionality by a user, which the protocol tester executes depending on the content of the variable in the received message.

3. The method according to claim 1 or 2,
**characterized by**:
specifying a loop functionality by a user, which the protocol tester executes depending on the content of the variable in the received message.

4. The method according to anyone of the preceding claims,
**characterized by**:
specifying a jump or GoTo functionality and/or an If-Then functionality by a user, which the protocol tester executes depending on the content of the variable in the received message.

5. The method according to anyone of the preceding claims,
**characterized in that**
furthermore, in step a), the instances involved in the communication are graphically selected, and/or in step b), the protocol layer is graphically selected, and/or in step c), the abstract communication interfaces of the protocol layer are graphically selected, wherein description files are associated with the parameters selectable therein, which are used for creating a communication sequence executable between the instances in step e).

6. The method according to anyone of the preceding claims,
**characterized in that**
the abstract communication interfaces include SAPs (Service Access Points).

7. The method according to anyone of the preceding claims,
**characterized in that**
the communication data includes PDUs (Protocol Data Units) and/or ASPs (Abstract Service Primitives).

8. The method according to anyone of the preceding claims,
**characterized in that**
step d) includes the following sub-steps:
d1) graphically selecting a data format;
d2) graphically establishing a communication sequence between the involved instances.

9. The method according to claim 8,
**characterized in that**
source code can be input in step d2).

10. The method according to anyone of the preceding claims,
**characterized in that**
description files are associated with all of the selectable parameters, which are used for creating a communication sequence executable between the instances in step e).

11. A protocol tester including
a) means for selecting the instances involved in a communication, wherein one of the instances is a protocol tester;
b) means for selecting a protocol layer, on the basis of which the communication between the selected instances is to proceed;
c) means for selecting those abstract communication interfaces of the protocol layer, which are involved in the communication;
d) means for selecting the communication data;
e) means for automatically creating a communication sequence executable between the instances by the protocol tester based on the selections according to a) to d),
wherein the selection means according to d) are graphical selection means, and description files are associated with the parameters selectable by them, which are usable according to e) by the creating means for creating a communication sequence executable between the instances,
wherein the means for selecting the communication data allow the graphical establishment of a communication sequence between the involved instances,
**characterized in that**
the means for selecting the communication data are configured to graphically specify within the communication data by a user:
first, at least one message containing at least one variable, with which a content can be associated, and wherein the message is to be sent from an instance to be tested to the protocol tester, and
secondly, activities, which are to be executed by the protocol tester upon reception of the at least one message depending on possible contents of the at least one variable in the received message.

## Revendications

1. Procédé destiné à établir un flux d'une communication se produisant entre au moins deux instances dont l'une est un testeur de protocole, les pas suivants étant réalisés sur ledit testeur de protocole :
a) la sélection des instances intervenant dans la communication ;
b) la sélection d'une couche de protocole sur la base de laquelle la communication entre les instances choisies est censée se dérouler ;
c) la sélection de celles des interfaces de communication abstraites de la couche de protocole intervenant dans la communication ;
d) la sélection des données de communication ;
e) l'établissement d'un flux de communication entre aux moins deux instances par le testeur de protocole en se basant sur les sélections faites aux pas a) à d) ;
la sélection du pas d) étant réalisée de manière graphique, aux paramètres censés être sélectionnés étant affectés des fichiers de description destinés à être utilisés au pas e) pour établir un flux de communication réalisable entre lesdites instances, ledit pas d) comprenant la structuration graphique d'un flux de communication entre les instances intervenantes,
**caractérisé par** le pas suivant :
l'établissement graphique des paramètres suivants entre les données de communication par l'utilisateur :
primo, d'au moins un message comprenant au moins une variable à laquelle peut être affectée un contenu, ledit message étant destiné à être envoyé au testeur de protocole par une instance censée être testée, et :
secundo, d'activités censées être réalisées par le testeur de protocole lors de la réception d'au moins l'un des messages en fonction de possibles contenus d'au moins l'une des variables du message reçu.

2. Procédé selon la revendication 1,
**caractérisé par** :
la spécification d'une fonctionnalité de Switch Case par un utilisateur, ladite fonctionnalité étant réalisée par le testeur de protocole en fonction du contenu des variables dans le message reçu.

3. Procédé selon la revendication 1 ou 2,
**caractérisé par** :
la spécification d'une fonctionnalité de Loop par un utilisateur, ladite fonctionnalité étant réalisée par le testeur de protocole en fonction du contenu des variables dans le message reçu.

4. Procédé selon l'une des revendications ci-devant,
**caractérisé par** :
la spécification d'une fonctionnalité de Jump et de GoTo respectivement et/ou d'une fonctionnalité If-Then par un utilisateur, ladite fonctionnalité étant réalisée par le testeur de protocole en fonction du contenu des variables dans le message reçu.

5. Procédé selon l'une des revendications ci-devant,
**caractérisé en ce que** :
en outre, les instances intervenant dans la communication sont sélectionnées graphiquement lors du pas a), et/ou **en ce que** la couche de protocole est sélectionnée graphiquement lors du pas b), et/ou **en ce que** les interfaces de communication abstraites de la couche de protocole sont sélectionnées graphiquement lors du pas c), aux paramètres sélectionnables étant affectés des fichiers de description utilisés lors du pas e) pour établir un flux de communication susceptible d'être réalisée entre les instances.

6. Procédé selon l'une des revendications ci-devant,
**caractérisé en ce que** :
les interfaces de communication abstraites comprennent des SAP (Service Access Points).

7. Procédé selon l'une des revendications ci-devant,
**caractérisé en ce que** :
les données de communication comprennent des PDU (Protocol Data Units) et/ou des ASP (Abstract Service Primitives).

8. Procédé selon l'une des revendications ci-devant,
**caractérisé en ce que** :
le pas d) comprend les sous-séquences suivantes :
d1) la sélection graphique d'un format de données ;
d2) la structuration graphique d'une séquence de communication entre les instances intervenantes.

9. Procédé selon l'une des revendications ci-devant,
**caractérisé en ce que** :
lors du pas d2), un code source peut être saisi.

10. Procédé selon l'une des revendications ci-devant,
**caractérisé en ce que** :
à tous les paramètres sélectionnables sont affectés des fichiers de description utilisés lors du pas e) pour établir un flux de communication réalisable entre les instances.

11. Testeur de protocole comprenant :
a) des moyens destinés à sélectionner les instances intervenant dans la communication, l'une desdites instances étant ledit testeur de protocole;
b) des moyens destinés à sélectionner une couche de protocole sur la base de laquelle la communication entre les instances sélectionnées est susceptible de se produire ;
c) des moyens destinés à sélectionner celles des interfaces de communication abstraites de la couche de protocole intervenant dans la communication ;
d) des moyens destinés à sélectionner les données de communication ;
e) des moyens destinés à l'établissement automatique d'un flux de communication réalisable entre les instances par le testeur de protocole, en se basant sur les choix faits selon a) à d) ;
les moyens de sélection selon d) étant des moyens de sélection graphique, aux paramètres sélectionnables par ces moyens étant affectés des fichiers de description susceptibles d'être utilisés conformément à e) par les moyens d'établissement pour la mise au point d'un flux de communication réalisable entre les instances, les moyens destinés à la sélection des données de communication permettant la structuration graphique d'un flux de communication entre les instances intervenantes,
**caractérisé en ce que** :
les moyens destinés à la sélection des données de communication sont conçus pour qu'un utilisateur soit censé établir graphiquement les paramètres suivants parmi les données de communication :
primo, au moins un message comprenant au moins une variable à laquelle peut être affectée un contenu, ledit message étant censé être envoyé au testeur de protocole par une instance à tester, et :
secundo, des activités censées être réalisées par le testeur de protocole lors de la réception d'au moins l'un des messages en fonction de possibles continus d'au moins l'une des variables dans le message reçu.
